Europäisches Patentamt

European Patent Office

Office européen des brevets

(11) Veröffentlichungsnummer: **0 091 081**
**A2**

(12) # EUROPÄISCHE PATENTANMELDUNG

(21) Anmeldenummer: 83103135.6

(22) Anmeldetag: 30.03.83

(51) Int. Cl.³: **A 22 C 11/02**

(30) Priorität: 01.04.82 DE 3212121

(43) Veröffentlichungstag der Anmeldung:
12.10.83 Patentblatt 83/41

(84) Benannte Vertragsstaaten:
AT BE CH DE FR GB IT LI NL SE

(71) Anmelder: Kollross, Günter
Am Wallerstädter Weg 20
D-6080 Gross Gerau-Dornheim(DE)

(72) Erfinder: Kollross, Günter
Am Wallerstädter Weg 20
D-6080 Gross Gerau-Dornheim(DE)

(74) Vertreter: Beyer, Werner, Dipl.-Ing. et al,
Staufenstrasse 36, II P.O. Box 174109
D-6000 Frankfurt/Main(DE)

(54) Verfahren und Vorrichtung zur Herstellung von Wurst als Aufschneidware.

(57) Bei der Herstellung von Wurst als Aufschneidware dergestalt, daß zunächst eine auf ein Füllrohr bis zu ihrem verschlossenen einen Ende aufgezogene schlauchförmige Verpackungshülle durch das Füllrohr hindurch auf einer vorbestimmten Länge mit Brät gefüllt und danach am anderen Ende eingeschnürt und verschlossen wird und ferner die nach entsprechender Zwischenbehandlung daraus entstandene fertige Wurst unter Entfernung der Wurstzipfel in Scheiben geschnittenen wird, wird erfindungsgemäß in die Verpackungshülle zusammen mit dem Brät an dessen Anfang und Ende je ein wenigstens einseitig ebener Abschlußkörper mit einer dem Füllrohrquerschnitt allenfalls geringfügig unterschreitenden Größe eingeführt, der nach der Zwischenbehandlung zusammen mit dem Wurstzipfel wieder entfernt wird. Durch ein solches Verfahren werden die Verluste an Brät in den Wurstzipfeln ohne Beeinträchtigung der optischen Qualität der abgepackten Wurstscheiben drastisch verringert.

## Beschreibung

Die Erfindung betrifft ein Verfahren zur Herstellung von Wurst als Aufschneidware, wobei zunächst eine auf ein Füllrohr bis zu ihrem verschlossenen einen Ende aufgezogene schlauchförmige Verpackungshülle durch das Füllrohr hindurch auf einer vorbestimmten Länge mit Brät gefüllt und danach am anderen Ende verschnürt und verschlossen wird und wobei ferner die nach entsprechender Zwischenbehandlung daraus entstandene fertige Wurst unter Entfernung der Wurszipfel in Scheiben geschnitten wird, sowie einem dabei zur Anwendung kommenden Abschlußkörper und eine Vorrichtung zur Durchführung eines solchen Verfahrens.

Der Anteil an aufgeschnittener und fertig abgepackter Wurst am Gesamtumsatz von Wurstwaren nimmt ständig zu. Zugleich steigen auch die Anforderungen der Kundschaft an das äußere Erscheinungsbild der abgepackten Ware hinsichtlich gleicher Größe der Wurstscheiben. Sich im Durchmesser verkleinernde Scheiben aus dem Zipfelbereich lassen sich nur schwer und allenfalls unter Preis verkaufen. Andererseits sind kontinuierlich sich verengende Wurstzipfel bei den bis heute bekannten Verfahren zur Wurstherstellung nicht zu vermeiden. Die Hersteller von Aufschneidware sind deshalb gezwungen, beträchtliche Gewinnverluste durch Abfall oder geminderte Erlöse für den Inhalt der Wurstzipfel in Kauf zu nehmen.

Aufgabe der Erfindung ist es, diesem Nachteil abzuhelfen und die Verluste an Brät in den Wurstzipfeln ohne Beeinträchtigung der optischen Qualität der abgepackten Wurstscheiben drastisch zu verringern.

Die Erfindung löst diese Aufgabe verfahrensmäßigdadurch, daß in die Verpackungshülle zusammen mit dem Brät an dessen Anfang

2

und Ende je ein wenigstens einseitig ebener Abschlußkörper mit
einer den Füllrohrquerschnitt allenfalls geringfügig unterschreitenden Größe eingeführt wird, welcher nach der Zwischenbehandlung zusammen mit dem Wurstzipfel wieder entfernt wird.
Ein solcher Abschlußkörper nimmt einen beträchtlichen Teil
des des bisher vom Wurstbrät voll ausgefüllten Zipfelinneren
ein und mindert dadurch den Brätverlust in den Wurstzipfeln
erheblich.

Bei dem erfindungsgemäßen Verfahren ist es besonders zweckmäßig, wenn die Abschlußkörper nach ihrer Entfernung und
gegebenenfalls einer Zwischenreinigung erneut in der bestimmungsgemäßen Weise beliebig oft verwendet werden.

Beim bekannten abschnittweisen Füllen, Einschnüren und Verschließen vorgeraffter schlauchförmiger Verpackungshüllen zu
einem beliebig langen Strang wird das erfindungsgemäße Verfahren
mit Vorteil derart angewandt, daß mit jedem Füllvorgang je ein
Abschlußkörper vor und hinter dem eingefüllten Brät in die
Verpackungshülle eingeführt wird.

Ein Abschlußkörper zur Verwendung bei dem erfindungsgemäßen Verfahren zeichnet sich zweckmäßig dadurch aus, daß er Kreisscheiben- oder Walzenform mit beidseitig ebenen Stirnflächen
aufweist. Da die Abschlußkörper einen großen Teil der Wurstzipfelvolumina einnehmen, werden der Verlust durch Abfall oder
nur unter Preis verkäuflicher minderwertiger Ware beträchtlich
verringert und der Gesamterlös gesteigert. Es leuchtet ein,
daß der Verlust umso geringer ist, je größer der Durchmesser
der Abschlußkörper im Verhältnis zum Hüllendurchmesser ist.
Da der Hüllendurchmesser zwangsläufig größer als der Außendurchmesser des Füllrohrs ist, andererseits aber der Durchmesser der Abschlußkörper höchstens die Füllrohrweite erreichen
kann, bleibt in dem sich verengenden Wurstzipfel auch bei
der erfindungsgemäßen Verwendung der Abschlußkörper ein mit Brät gefüllter Volumenanteil übrig. Dieser Volumenanteil könnte nur dann völlig eliminiert werden, wenn es gelingt, Abschlußkörper zu schaffen, die nach dem Austritt aus dem Füllrohr ihren Durchmesser auf die volle Hüllenweite vergrößern.

Eine Vorrichtung zur Durchführung des erfindungsgemäßen Verfahrens zeichnet sich zweckmäßig durch einen das Füllrohr bildenden langgestreckten Zylinder aus, in welchem ein Kolben zwischen einer vorderen Endstellung an der Füllrohrmündung und einer weit zurückgezogenen hinteren Endstellung verschieblich ist, wobei in dem Zylinder vor der hinteren Endstellung des Kolbens ein Brätzuführkanal mündet und die Zylinderwandung vor und hinter dieser Mündung je eine verschließbare Öffnung zur seitlichen Einführung der Abschlußkörper aufweist.

Weitere Merkmale zur vorteilhaften Ausgestaltung dieser Vorrichtung ergeben sich aus den Unteransprüchen 8 bis 16.

Die Erfindung wird nachstehend anhand eines in der Zeichnung dargestellten Ausführungsbeispiels einer Vorrichtung zur Durchführung des erfindungsgemäßen Verfahrens näher erläutert. Es zeigen:

Fig. 1:     die Vorrichtung im horizontalen Längsschnitt in Ruhestellung vor Beginn eines
            neuen Füllvorgangs,

Fig. 2:     einen Querschnitt nach Linie II-II in
            Fig. 1,

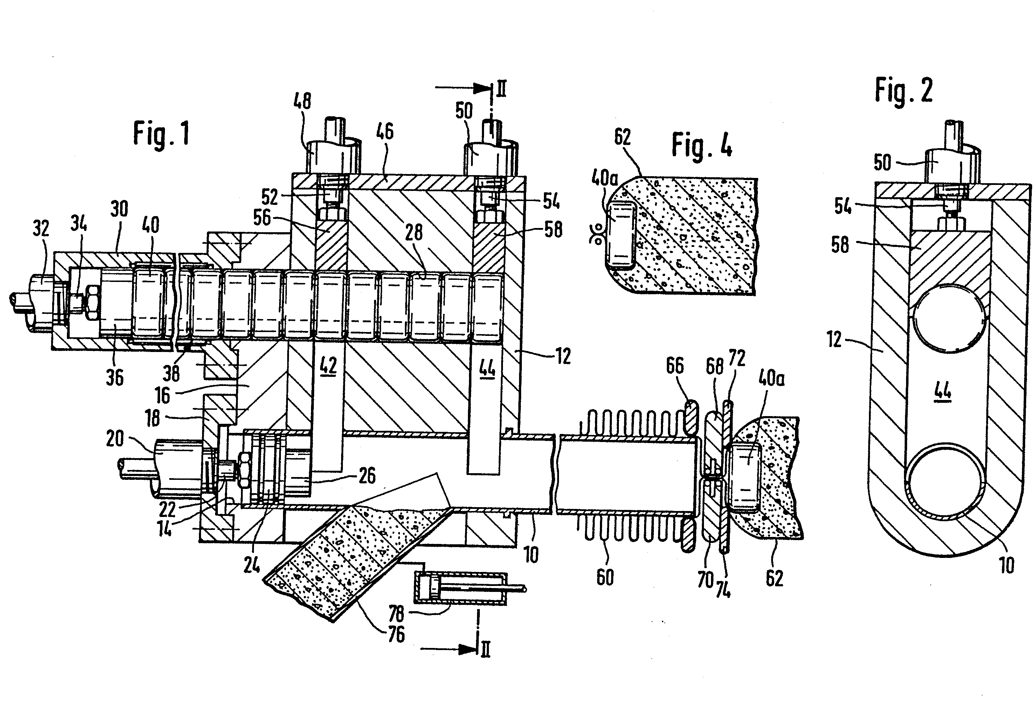

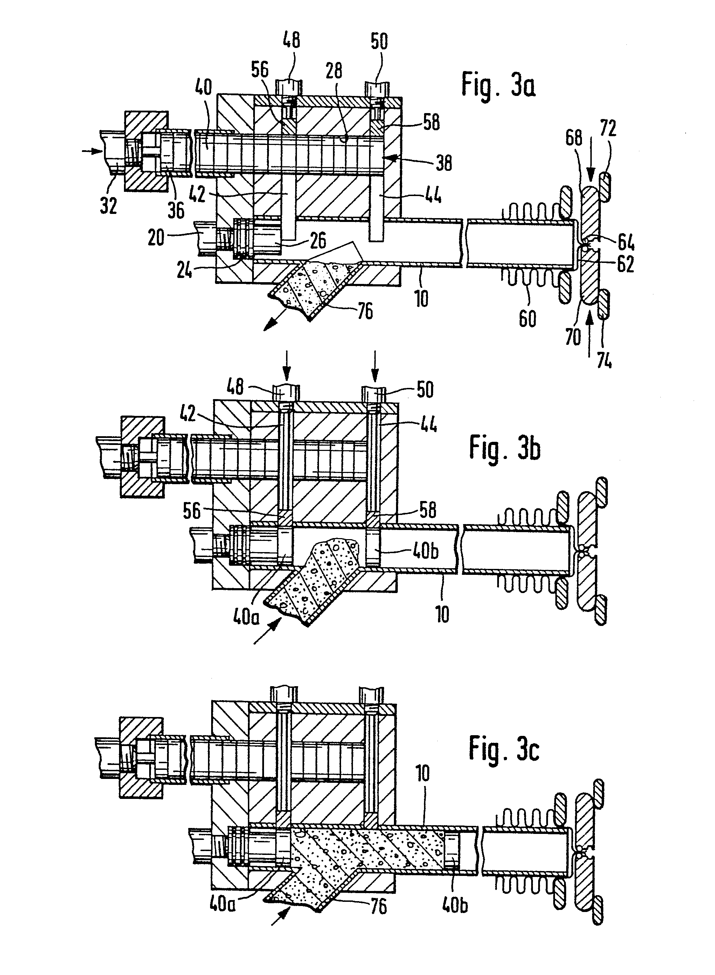

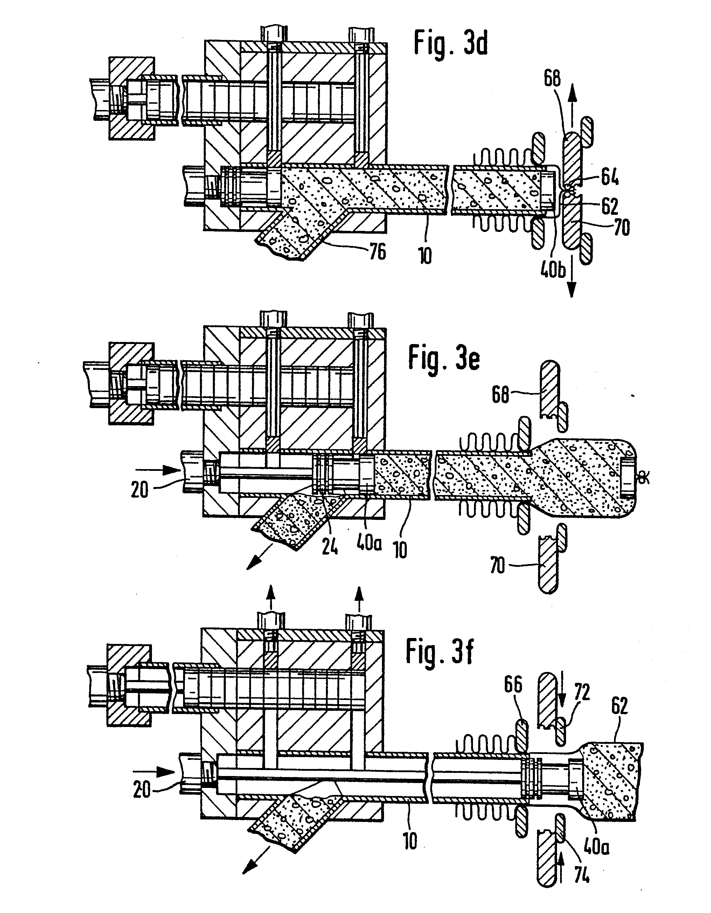

Fig. 3a-h:  verkleinerte und schematisierte Längsschnitte ähnlich in Fig. 1 in acht verschiedenen Phasen eines Füll- und
            Verschließzyklus und

Fig. 4:         im Längsschnitt einen Wurstzipfel mit
                darin enthaltenem Abschlußkörper.

Gemäß Fig. 1 ist ein zylindrisches Füllrohr 1o mit seinem
hinteren Endabschnitt in einer blockförmigen Halterung 12
aufgenommen und ragt am Ende in eine Bohrung 14 innerhalb
einer an der Halterung 12 befestigten Platte 16. Die Bohrung
14 ist durch einen lösbar an der Platte 16 befestigten
Deckel 18 verschlossen, der in einer kleineren Bohrung das
vordere Ende eines Kraftzylinders 2o aufnimmt. Der Kraftzylinder 2o hat ungefähr die gleiche Länge wie der Füllrohrzylinder 1o und ist aus Platzgründen größtenteils weggebrochen dargestellt. Die Kolbenstange 22 des Kraftzylinders
2o ragt in den Füllrohrzylinder 1o und trägt am freien
Ende einen darin dichtend verschieblichen Kolben 24 mit
einem verjüngten zylindrischen Ansatz 26 am vorderen Ende.
Der Kolben 24 ist mit Hilfe des Kraftzylinders 2o aus der
in Fig. 1 gezeigten zurückgezogenen Stellung in eine in Fig. 3f
gezeigte voll vorgeschobene Stellung verschieblich, in
welcher nur noch ein letzter Kolbenabschnitt im Füllrohr
aufgenommen ist.

In der blockförmigen Halterung 12 ist parallel zum Füllrohrzylinder 1o eine Bohrung 28 von gleichem Durchmesser wie
der Innendurchmesser des Füllrohrzylinders vorgesehen.
Die Bohrung 28 setzt sich in der Platte 16 sowie einem daran lösbar befestigten topfförmigen Magazinbehälter 3o fort,
der in seiner mit einer kleineren Bohrung versehenen Endwand einen wiederum größtenteil weggebrochen dargestellten
Kraftzylinder 32 aufnimmt. Das vordere Ende der Bohrung 28
innerhalb der Halterung 12 ist verschlossen.

Die Kolbenstange 34 des Kraftzylinders 32 trägt am freien
Ende ein zylindrisches Druckstück 36 zur Beaufschlagung
eines Stapels 38 von Abschlußkörpern 4o, die in der Bohrung

5

28 hintereinander aufgereiht sind.

Die Abschlußkörper 4o haben Kreisscheiben- oder Walzenform und bestehen zweckmäßig aus einem wärmebeständigen
Kunststoff mit einer solchen Temperaturfestigkeit, daß die
Körper zur Keimfreimachung in siedendem Wasser gereinigt
werden können. Die axiale Länge aller Abschlußkörper 4o
ist genau gleich.

Um die Abschlußkörper 4o in die Bohrung 28 einbringen zu
können, ist der Magazinbehälter zweckmäßig mit einem (nicht
gezeigten) Schnellverschluß an der Platte 16 befestigt.

In der blockförmigen Halterung 12 befinden sich in einem
der Teilung des Stapels 38       entsprechenden Abstand
zwei Querkanäle 42, 44, die in das mit entsprechenden
Öffnungen versehene Füllrohr 1o münden. Die Querkanäle 42, 44
sind im Querschnitt den Abschlußkörpern angepaßt und reichen
bis zur Außenseite der Halterung 12, auf die ein Deckel 46
aufgesetzt und auf geeignete Weise befestigt ist. Der Deckel
46 lagert zwei wiederum in der Hauptsache weggebrochen dargestellte Kraftzylinder 48, 5o, an deren in die Querkanäle 42,
44 ragenden Kolbenstangen 52, 54 je ein Schieber 56, 58 befestigt ist.

Die Schieber 56, 58 füllen den Querschnitt der Querkanäle
42, 44 genau aus und sind an ihren Stirnflächen der Krümmung
der Zylinderbohrung angepaßt. Wenn die Kraftzylinder 48, 5o
eingefahren sind, geben die Schieber 56, 58 den Querschnitt
der Magazinbohrung 28 frei, so daß der darin enthaltene
Stapel 38 von Abschlußkörpern 4o vom Kraftzylinder 32 gegen
das geschlossene Ende der Bohrung 28 in Anlage gebracht und
gehalten werden kann. Wenn hingegen die Kraftzylinder 48, 5o
ausgefahren werden, erfaßt jeder Schieber 56, 58 einen

6

Abschlußkörper 4o aus dem Stapel 38 und verschiebt ihn durch den zugehörigen Querkanal 42, bzw. 44 bis in den Füllrohrzylinder 1o, wobei die Stirnflächen der Schieber die Zylinderwandung an den Einmündungen der Querkanäle 42, 44 ergänzen und verschließen.

Das Füllrohr 1o hat eine geeignete freie Länge zur an sich bekannten Aufnahme einer zu einer sogenannten Raupe 6o gerafften schlauchförmigen Verpackungshülle 62 aus synthetischem Wursthüllenmaterial, deren vorderes Ende durch eine Metallklammer 64, einen sogenannten "Clip" verschlossen ist. Eine Darmbremse 66 umfaßt in bekannter Weise das Mündungsende des Füllrohres 1o mit der Verpackungshülle 62 und sorgt dafür, daß beim Füllen der Verpackungshülle mit Wurstbrät ein ausreichend großer Abziehwiderstand aufrecht erhalten wird, der ein pralles Füllen der Wursthülle gewährleistet.

Unmittelbar vor der Mündung des Füllrohrzylinders 1o ist eine von zwei gegeneinander fahrbaren Backen 68, 7o gebildete Einschnür- und Klammersetzvorrichtung zum gleichzeitigen Setzen zweier benachbarter Verschlußklammern angeordnet. Die Ausbildung einer solchen "Doppelclipvorrichtung" ist bekannt und bedarf deshalb hier keiner weiteren Erläuterung.

Schließlich befinden sich vor der Einschnür- und Klammersetzvorrichtung 68, 7o zwei weitere gegeneinander verfahrbare Backen 72, 74, die eine an späterer Stelle in ihre Funktion erläuterte Rückhalteeinrichtung bilden.

Ein an eine (nicht gezeigte) Wurstfüllmaschine angeschlossener Brätzuführkanal 76 mündet im spitzen Winkel in den Füllrohrzylinder 1o zwischen den Querkanälen 42, 44 und hat vorzugsweise den gleichen Querschnitt wie der Füllrohrzylinder. An den Brätzuführkanal 76 ist in bekannter

7

Weise eine Brätrücksaugpumpe 78 angeschlossen, die nur
schematisch dargestellt ist.

Der Füllrohrzylinder 1o mit dem Brätzuführkanal 76 sowie
das gesamte Abschlußkörpermagazin stehen im Betrieb in
bekannter Weise unter Vakuum.

Mit der gezeigten Vorrichtung wird das erfindungsgemäße
Verfahren wie folgt durchgeführt:

Es sei zunächst angenommen, daß gemäß der Darstellung in
Fig. 3a eine am vorderen Ende durch eine Verschlußklammer
64 verschlossene Verpackungshülle 62 in Gestalt einer Raupe
6o auf den Füllrohrzylinder 1o aufgezogen ist und die Darmbremse 66 auf das Füllrohrende aufgeschoben ist. Die Backen
68, 7o der Einschnür- und Klammersetzvorrichtung sind geschlossen, und die Rückhaltebacken 72, 74 sind geöffnet.
Der Kraftzylinder 2o ist vollständig eingefahren, so daß
der Kolben 24 mit dem verjüngten zylindrischen Ansatz 26
den Querkanal 42 freigibt. Die Kraftzylinder 48, 5o sind
gleichfalls eingefahren , und die Magazinbohrung 28 ist mit
einem Stapel 38 von Absc Hußkörpern 4o gefüllt, auf welche
das Druckstück 36 unter der Wirkung des Kraftzylinders 32
lastet. Die Füllmaschine steht still, und die Brätrücksaugpumpe 78 hält das im Brätzuführkanal 76 enthaltene Wurstbrät unter Vakuum derart zurück, daß der Füllrohrzylinder
1o frei von Wurstbrät ist.

Nun werden die Kraftzylinder 48, 5o betätigt und dadurch
je ein Abschlußkörper 4oa bzw. 4ob mit Hilfe der Schieber
56, 58 durch die Querkanäle 42, 44 in den Füllrohrzylinder
1o verschoben. Gleichzeitig wird die Füllmaschine eingeschaltet (Fig. 3b).

8

Mit zunehmender Förderung von Wurstbrät durch den Brätzufuhrkanal 76 wird der Raum zwischen den Abschlußkörpern 4oa und
4ob mit Brät angefüllt (Fig. 3c), und der vordere Abschlußkörper 4ob wird durch das Füllrohr 1o zunehmend nach vorn
verschoben, bis er in das von der Verschlußklammer 64 verschlossene vordere Ende der Verpackungshülle 62 gelangt ist
(Fig. 3d).

Hieraufhin werden die Backen 68, 7o der Einschnür- und
Klammersetzvorrichtung geöffnet, während gleichzeitig die
Füllmaschine abgeschaltet und die Brätrücksaugpumpe 78
eingeschaltet werden. Nun wird der Kraftzylinder 2o ausgefahren und schiebt mit dem Kolben 24 den dortigen Abschlußkörper 4oa durch das Füllrohr 1o nach vorn (Fig. 3e),
bis schließlich die gesamte Wurstmasse mit dem hinteren
Abschlußkörper 4oa aus dem Füllrohrzylinder heraus und in
die dabei unter der Darmbremse 66 hindurch vom Füllrohr
ablaufende Verpackungshülle 62 hineingedrückt worden ist.
(Fig. 3f).

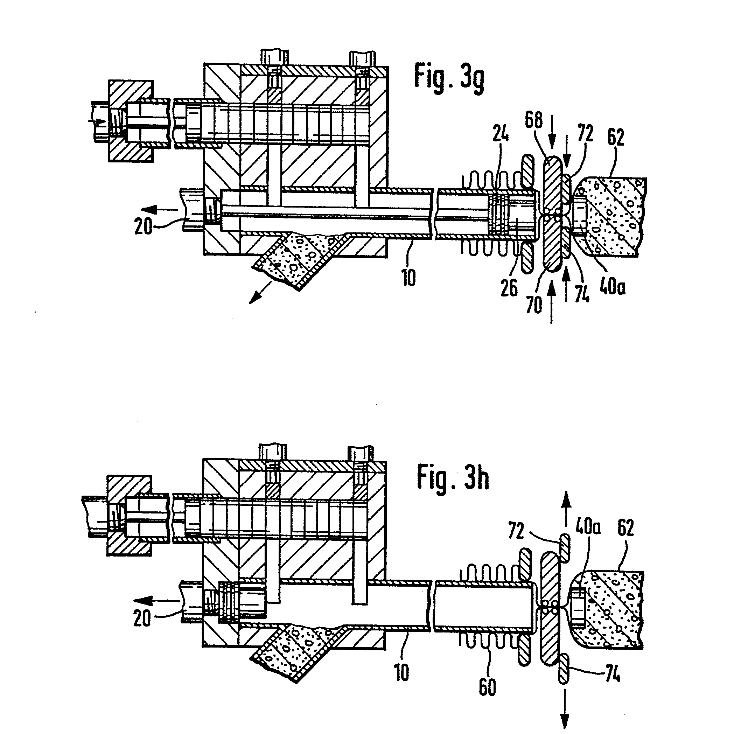

In dieser Stellung befindet sich der hintere Abschlußkörper
4oa vor den Rückhaltebacken 72, 74, die nunmehr gegeneinander
gefahren werden und den Abschlußkörper 4oa festhalten,
während der Kraftzylinder 2o mit dem Kolben 24 soweit zurückgefahren wird, daß der Ansatz 26 innerhalb des Füllrohrzylinders 1o zu stehen kommt. In dieser Stellung schließen
die Backen 68, 7o der Einschnür- und Klammersetzvorrichtung
(Fig. 3g) und schnüren die Verpackungshülle 62 ein und
setzen in dichtem Abstand zwei neue Verschlußklammern,
von denen die vordere die soeben hergestellte Wurst abschließt und die hintere den vorderen Abschluß der nachfolgenden Verpackungshülle bildet.

Jetzt öffnen die Rückhaltebacken 72, 74, und der Kraftzylinder 2o fährt in die Ausgangsstellung gemäß Fig. 3h

9

zurück, von der aus ein neuer Füllvorgang in der vorbeschriebenen Reihenfolge beginnen kann.

Da die gesamte Vorrichtung unter Vakuum steht, wird die
Bildung schädlicher Luftpolster praktisch vermieden.

Fig. 4 zeigt den hinteren Zipfel einer mit der beschriebenen
Vorrichtung hergestellten Wurst mit darin enthaltenem
Abschlußkörper 4oa, der nach entsprechender Behandlung
der Wurst weggeschnitten und, ggf. nach entsprechender
Reinigung wieder verwendbar ist. Wie Fig. 4 erkennen läßt,
nimmt der Abschlußkörper 4oa einen beträchtlichen Teil des
Zipfelvolumens ein und vermindert dadurch den Verlust an für
die Aufschnittware nicht verwendbarem Brät.

1c

Patentansprüche

---

1. Verfahren zur Herstellung von Wurst als Aufschneidware,
wobei zunächst eine auf ein Füllrohr bis zu ihrem verschlossenen einen. Ende aufgezogene schlauchförmige Verpackungshülle durch das Füllrohr hindurch auf einer vorbestimmten Länge mit Brät gefüllt und danach am anderen
Ende eingeschnürt und verschlossen wird und wobei ferner
die nach entsprechender Zwischenbehandlung daraus entstandene fertige Wurst unter Entfernung der Wurstzipfel
in Scheiben geschnitten wird, d a d u r c h    g e k e n n -
z e i c h n e t , daß in die Verpackungshülle zusammen mit
dem Brät an dessen Anfang und Ende je ein wenigstens einseitig ebener Abschlußkörper mit einer den Füllrohrquerschnitt allenfalls geringfügig unterschreitenden Größe
eingeführt wird, welcher nach der Zwischenbehandlung zusammen mit dem Wurstzipfel wieder entfernt wird.

2. Verfahren nach Anspruch 1, d a d u r c h    g e k e n n -
z e i c h n e t , daß die Abschlußkörper nach ihrer Entfernung und gegebenenfalls einer Zwischenreinigung erneut
in der bestimmungsgemäßen Weise beliebig oft verwendet
werden.

3. Verfahren nach Anspruch 1 oder 2, d a d u r c h    g e -
k e n n z e i c h n e t , daß beim bekannten abschnittweisen Füllen, Einschnüren und Verschließen vorgeraffter
schlauchförmiger Verpackungshüllen zu einem beliebig
langen Strang mit jedem Füllvorgang je ein Abschlußkörper
vor und hinter dem eingefüllten Brät in die Verpackungshülle eingeführt wird.

4. Abschlußkörper zur Verwendung bei dem Verfahren nach
einem der Ansprüche 1 bis 3, d a d u r c h   g e k e n n -
z e i c h n e t , daß er Kreisscheiben- oder Walzenform
mit beidseitig ebenen Stirnflächen aufweist.

5. Abschlußkörper nach Anspruch 4, d a d u r c h   g e -
k e n n z e i c h n e t , daß das Scheibenmaterial kochfest ist.

6. Abschlußkörper nach Anspruch 5, d a d u r c h   g e -
k e n n z e i c h n e t , daß  er aus wärmebeständigem
Kunststoff besteht.

7. Vorrichtung zur Durchführung des Verfahrens nach einem
der Ansprüche 1 bis 3, g e k e n n z e i c h n e t
d u r c h   einen das Füllrohr (1o) bildenden langgestreckten Zylinder, in welchem ein Kolben  (24) zwischen
einer vorderen Endstellung an der Füllrohrmündung und
einer weit zurückgezogenen hinteren Endstellung verschieblich ist, wobei in dem Zylinder vor der hinteren Endstellung des Kolbens (24) ein Brätzuführkanal (76) mündet
und die Zylinderwandung vor und hinter dieser Mündung
je eine verschließbare Öffnung (Kanäle 42, 44) zur seitlichen Einführung der Abschlußkörper (4o) aufweist.

8. Vorrichtung nach Anspruch 7, d a d u r c h   g e -
k e n n z e i c h n e t , daß der Brätzuführkanal (76)
im spitzen Winkel in das Füllrohr (1o) mündet.

9. Vorrichtung nach Anspruch 7 oder 8, d a d u r c h   g e -
k e n n z e i c h n e t , daß dem Brätzuführkanal (76)
in an sich bekannter Weise eine Brätrücksaugpumpe zugeordnet ist.

10. Vorrichtung nach einem der Ansprüche 7 bis 9, d a -
d u r c h   g e k e n n z e i c h n e t , daß der Kolben
(24) von einem Kraftzylinder (2o) über eine an seiner
Rückseite anschließende Kolbenstange (22) betätigbar ist.

11. Vorrichtung nach einem der Ansprüche 7 bis 1o, d a -
d u r c h   g e k e n n z e i c h n e t , daß der Kolben
(24) an seiner Vorderseite einen verjüngten zylindrischen
Ansatz (26) trägt, mit dem er in seiner vorderen Endstellung aus dem Füllrohr herausragt, und daß vor dem
Füllrohr (1o) in an sich bekannter Weise eine Einschnür-
und Klammersetzvorrichtung (68, 7o) angeordnet ist.

12. Vorrichtung nach Anspruch 11, d a d u r c h   g e -
k e n n z e i c h n e t , daß die Einschnür- und Klammersetzvorrichtung (68, 7o) zum gleichzeitigen Setzen von
zwei Verschlußklammern ausgebildet ist.

13. Vorrichtung nach einem der Ansprüche 7 bis 12, g e -
k e n n z e i c h n e t   d u r c h   ein neben dem Füllrohrzylinder (1o) angeordneten Magazin (28, 3o) für die
Abschlußkörper (4o) sowie eine mechanische Zuführeinrichtung (48-58) zum Einführen der Abschlußkörper (4o)
in den Füllrohrzylinder (4o) durch dessen Einführöffnungen.

14. Vorrichtung nach Anspruch 13, d a d u r c h   g e k e n n -
z e i c h n e t , daß das Magazin einen sich parallel zum
Füllrohrzylinder (1o) erstreckenden Kanal (Bohrung 28)
zur Aufnahme eines Stapels (38) von Abschlußkörpern (4o)
aufweist, der von zwei zu den Einführöffnungen in der
Zylinderwandung führenden Querkanälen (42, 44) durchsetzt
ist, in denen je ein antreibbarer Schieber (56, 58) zur
Überführung je eines Abschlußkörpers (4o) in den Füllrohrzylinder (1o) angeordnet ist.

15. Vorrichtung nach Anspruch 14, d a d u r c h   g e -
k e n n z e i c h n e t , daß die Stirnflächen der
Schieber (56, 58) der Füllrohrkrümmung angepaßt sind.

16. Vorrichtung nach Anspruch 14 oder 15, d a d u r c h
g e k e n n z e i c h n e t , daß die Schieber (56, 58)
von Kraftzylindem (48, 5o) betätigbar sind.

Fig. 1

Fig. 2

Fig. 4

1/4

0091081

Fig. 3a

Fig. 3b

Fig. 3c

Fig. 3d

Fig. 3e

Fig. 3f

Fig. 3g

Fig. 3h